(19) Europäisches Patentamt
European Patent Office
Office européen des brevets

(11) Veröffentlichungsnummer: **0 240 462**
**B1**

(12) **EUROPÄISCHE PATENTSCHRIFT**

(45) Veröffentlichungstag der Patentschrift: **01.08.90**

(51) Int. Cl.$^5$: **C 07 C 239/20,** C 08 K 5/32

(21) Anmeldenummer: **87810183.1**

(22) Anmeldetag: **30.03.87**

(54) **Substituierte Aminoxypropanoate.**

(30) Priorität: **04.04.86 US 848105**

(43) Veröffentlichungstag der Anmeldung:
**07.10.87 Patentblatt 87/41**

(45) Bekanntmachung des Hinweises auf die Patenterteilung:
**01.08.90 Patentblatt 90/31**

(84) Benannte Vertragsstaaten:
**BE CH DE FR GB IT LI NL SE**

(56) Entgegenhaltungen:

**DIE PHARMAZIE, Band 20, Heft 5, Mai 1965, Seiten 291-296, Berlin, DE; G. ZINNER et al.: "Über die O-Alkylierung von N-Hydroxy-dialkylaminen"**

(73) Patentinhaber: **CIBA-GEIGY AG**
**Klybeckstrasse 141**
**CH-4002 Basel (CH)**

(72) Erfinder: **Ravichandran, Ramanathan**
**111 DeHaven Drive Apt. 125**
**Yonkers New York 10703 (US)**
Erfinder: **Snead, Thomas E.**
**39 King Street**
**Dobbs Ferry New York 10522 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 240 462 B1

**Beschreibung**

Die vorliegende Erfindung betrifft die Verwendung von Aminoxypropanoaten zum Stabilisieren von organischem Material und das mit diesen Verbindungen gegen oxidativen, thermischen und/oder aktinischen Abbau stabilisierte organische Material sowie auch neue Aminoxypropanoate.

Organische Materialien, wie z.B. Kunststoffe und Harze, unterliegen thermischem, oxidativem und lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird, und vom jeweiligen Abbaumechanismus ab. Daher ist es im allgemeinen schwierig, für eine konkrete Anwendung den wirksamsten und ökonomischsten Stabilisator anzugeben.

So kann beispielsweise die Wirksamkeit eines Stabilisators, der die Flüchtigkeit einer Verbindung reduziert, darauf zurückgeführt werden, dass er einen Bindungsbruch der Substratmoleküle verhindert. Um eine geringe Versprödung oder die Erhaltung der Elastizität eines Polymeren oder eines Elastomeren zu gewährleisten, kann von einem Stabilisator verlangt werden, dass er übermässige Vernetzungsreaktionen und/oder Kettenabbruch verhindert. Um die Vergilbung zu unterbinden, müssen Reaktionen, die zu neuen Chromophoren führen, verhindert werden. Weiterhin müssen Probleme der Verarbeitungsstabilität und der Substratverträglichkeit beachtet werden.

Verschiedene organische Hydroxylamine sind bekannt und einige sind im Handel erhältlich. Eine Anzahl von Patenten offenbaren substituierte Hydroxylamine als Antioxidantien für verschiedene Substrate, einschliesslich Polyolefine, Polyester und Polyurethane. Als repräsentative Patente seien die US-Patente 3 432 578, 3 644 278, 3 778 464, 3 408 422, 3 926 909, 4 316 996 und 4 386 224 genannt, welche im wesentlichen N,N-Dialkyl-, N,N-Diaryl- und N,N-Diaralkylhydroxylamine und deren Wirksamkeit als Farbverbesserer beschreiben.

Ferner sind O-acylierte Hydroxylaminderivate und deren pharmakologische Verwendung aus den US-Patentschriften 3 184 500 und 3 344 190 bekannt. US 3 869 278 offenbart Hydroxylaminderivate und deren Verwendung als Abscissionsmittel für Früchte. Die pharmazeutische Verwendung von bestimmten Hydroxylaminderivaten wird in den folgenden Veröffentlichungen beschrieben: G. Zinner, Angew. Chem. *71*, 311 (1959); G. Zinner et al., Pharmazie *20*, 291 (1965) und Chem. Abstr. *72*, 78685h (1970).

Es wurde nun gefunden, dass die Zusammensetzungen dieser Erfindung eine Vielzahl der gewünschten Eigenschaften besitzen, die auf die Anwesenheit von bestimmten Aminoxypropanoaten zurückzuführen sind. So schützen diese Propanoate eine Reihe von Substraten, wie z.B. Polyolefine, Elastomere und Schmiermittel gegen oxidativen und thermischen Abbau. Ferner sind sie sehr wirkungsvolle Farbverbesserer und Verarbeitungsstabilisatoren für Polyolefinzusammensetzungen, die Metallsalze von Fettsäuren und phenolische Antioxidantien enthalten können. Hauptsächlich können die Aminoxypropanoate dazu dienen, Verfärbungen zu vermindern, die auf die Gegenwart von phenolischen Antioxidantien und/oder auf die Verarbeitungsbedingungen zurückzuführen sind. Ferner schützen diese Verbindungen das organische Polymer direkt vor den Auswirkungen der Verarbeitungsbedingungen. Sie schützen auch solche Polyolefinzusammensetzungen, die gehinderte Amin-Lichtstabilisatoren oder Kombinationen von phenolischen Antioxidantien und Phosphiten enthalten, vor der Verfärbung. Verfärbungen, die auf die Einwirkung von Zerfallsprodukten natürlicher Gase zurückzuführen sind, werden ebenfalls merklich vermindert.

Gegenstand der vorliegenden Erfindung sind Zusammensetzungen enthaltend ein gegen oxidativen, thermischen und/oder aktinischen Abbau empfindliches organisches Material und mindestens eine Verbindung der Formel I,

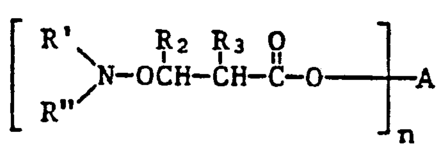

(I)

worin n eine ganze Zahl von 1 bis 4 ist, R' und R'' unabhängig voneinander Wasserstoff, $C_1$—$C_{36}$-Alkyl, Allyl, $C_5$—$C_{12}$-Cycloalkyl, $C_7$—$C_9$-Aralkyl oder durch $C_1$—$C_{36}$-Alkyl substituiertes $C_7$—$C_9$-Aralkyl bedeuten, $R_2$ und $R_3$ unabhängig voneinander Wasserstoff, $C_1$—$C_{12}$-Alkyl oder Aryl sind und wenn n 1 ist, A Wasserstoff, Alkalimetall, $C_1$—$C_{36}$-Alkyl, $C_2$—$C_6$-Alkoxyalkyl, $C_5$—$C_{12}$-Cycloalkyl, $C_7$—$C_9$-Aralkyl, durch $C_1$—$C_{36}$-Alkyl substituiertes $C_7$—$C_9$-Aralkyl, Aryloxy-($C_2$—$C_6$-alkyl) oder ein 5- bis 7-gliedriger heterocyclischer Ring ist, wenn n 2 bedeutet, A ein Erdalkalimetall, $C_2$—$C_{12}$-Alkylen, $C_6$—$C_{10}$-Cycloalkylen, $C_6$—$C_{10}$-Arylen, eine Gruppe

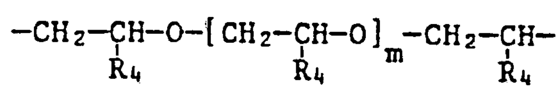

,

worin m 1 oder 2 ist und $R_4$ Wasserstoff oder Methyl bedeutet, oder eine Gruppe

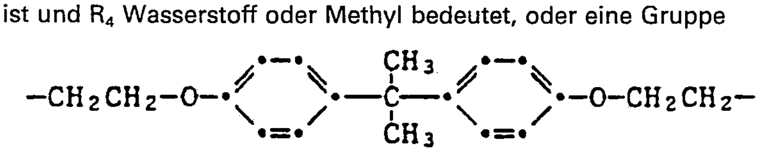

ist,

wenn n 3 ist, A $C_3$—$C_{12}$-Alkantriyl oder durch ein oder mehrere Sauerstoffatome unterbrochenes $C_3$—$C_{12}$-Alkantriyl bedeutet und wenn n 4 ist, A $C_4$—$C_6$-Alkantetrayl bedeutet.

R', R'' und A bedeuten als $C_1$—$C_{36}$-Alkyl beispielsweise Methyl, Ethyl, n-Propyl, n-Butyl, tert-Butyl, n-Pentyl, n-Octyl, 2-Ethylhexyl, Decyl, Dodecyl oder Octadecyl. Geradkettiges oder verzweigtes $C_1$—$C_{18}$-Alkyl, insbesondere $C_1$—$C_{12}$-Alkyl, ist bevorzugt.

R', R'' und A sind als $C_5$—$C_{12}$-Cycloalkyl beispielsweise Cyclopentyl, Cyclohexyl oder Cyclooctyl. Bevorzugt ist Cycloalkyl mit 5 bis 7 Kohlenstoffatomen, insbesondere Cyclopentyl und Cyclohexyl.

R', R'' und A können als unsubstituiertes oder durch $C_1$—$C_{36}$-Alkyl substituiertes $C_7$—$C_9$-Aralkyl insbesondere Phenylalkyl mit 7 bis 9 Kohlenstoffatomen bedeuten, wobei der Phenylring gegebenenfalls durch $C_1$—$C_{36}$-Alkyl, bevorzugt Methyl, substituiert sein kann. Beispiele sind Benzyl, α-Methylbenzyl und α,α-Dimethylbenzyl.

$R_2$ und $R_3$ bedeuten als $C_1$—$C_{12}$-Alkyl zum Beispiel Methyl, Ethyl, n-Propyl, n-Butyl, tert-Butyl, n-Pentyl, n-Octyl, 2-Ethylhexyl, Decyl oder Dodecyl. $C_1$—$C_4$-Alkyl ist bevorzugt.

$R_2$ und $R_3$ bedeuten als Aryl beispielsweise Phenyl.

$R_2$ und $R_3$ sind bevorzugt Wasserstoff, $C_1$—$C_4$-Alkyl oder Phenyl.

A ist als Alkalimetall zum Beispiel Li, Na oder K, bevorzugt K.

R', R'' und A sind bevorzugt Wasserstoff.

A bedeutet als Alkoxyalkyl mit 2 bis 6 Kohlenstoffatomen beispielsweise Ethoxymethyl.

A ist als eine 5- bis 7-gliedrige heterocyclische Gruppe vorzugsweise eine gesättigte heterocyclische Gruppe mit N und/oder O als Heteroatomen. Als Beispiele seien genannt: 4-Piperidyl und Tetrahydrofuryl.

A ist als Aryloxy-($C_2$—$C_6$-alkyl) zum Beispiel Phenyloxy-($C_2$—$C_6$-alkyl), insbesondere Phenyloxyethyl.

A bedeutet als Erdalkalimetall zum Beispiel Kalzium.

Beispiele für A als $C_2$—$C_{12}$-Alkylene sind Ethylen, Trimethylen und Hexamethylen. $C_2$—$C_6$-Alkylen ist bevorzugt.

A bedeutet als Cycloalkylen mit 6 bis 10 Kohlenstoffatomen bevorzugt Cyclohexylen.

Als $C_6$—$C_{10}$-Arylen bedeutet A zum Beispiel Phenylen oder Xylylen.

A stellt auch bevorzugt eine Gruppe

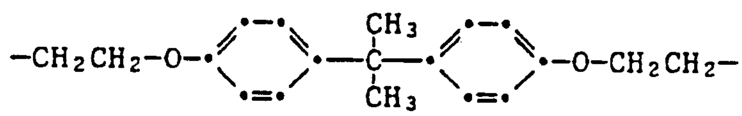

oder

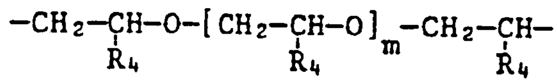

dar, worin m und $R_4$ die oben angegebenen Bedeutungen besitzen.

A ist als $C_3$—$C_{12}$-Alkantriyl, welches gegebenenfalls durch ein oder mehrere, bevorzugt 1 bis 2, Sauerstoffatome unterbrochen ist, zum Beispiel Trimethylylpropan, Glyceryl oder eine Gruppe

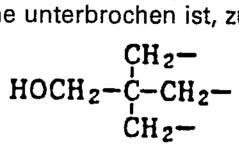 oder $H_3CH_2C-C-(CH_2OCH_2CH_2)_3$ .

A bedeutet als $C_4$—$C_6$-Alkantetrayl bevorzugt Pentaerythrityl.

Von Interesse sind Zusammensetzungen enthaltend Verbindungen der Formel I, worin n 1, 2 oder 4 bedeutet, R' und R'' unabhängig voneinander $C_1$—$C_{12}$-Alkyl, Allyl oder Benzyl sind, $R_2$ und $R_3$ unabhängig voneinander Wasserstoff oder Methyl darstellen und wenn n 1 ist, A Alkalimetall, Wasserstoff oder $C_1$—$C_{18}$-Alkyl ist, wenn n 2 bedeutet, A $C_2$—$C_6$-Alkylen ist und wenn n 4 bedeutet, A Pentaerythrityl darstellt.

Bevorzugt bedeuten R' und R'' unabhängig voneinander Wasserstoff, $C_1$—$C_{18}$-Alkyl, Cyclopentyl, Cyclohexyl, Benzyl, α-Methylbenzyl oder α,α-Dimethylbenzyl und $R_2$ und $R_3$ unabhängig voneinander Wasserstoff oder $C_1$—$C_4$-Alkyl.

Besonders bevorzugt bedeuten R' und R'' Benzyl und $R_2$ und $R_3$ Wasserstoff.

Wenn n 1 ist, bedeutet A bevorzugt Wasserstoff oder $C_1$—$C_{18}$-Alkyl.

Wenn n 2 ist, bedeutet A bevorzugt $C_2$—$C_6$-Alkylen, Cyclohexylen, Phenylen oder Xylylen.

Wenn n 3 ist, bedeutet A bevorzugt Glyceryl oder Trimethylylpropan und wenn n 4 ist, bedeutet A bevorzugt Pentaerythrityl.

n ist bevorzugt 1 oder 2.

Bevorzugt sind auch diejenigen Zusammensetzungen, worin die Verbindung der Formel I Methyl - 3 - (N,N - dibenzylaminoxy)propanoat, Ethyl - 3 - (N,N - dibenzylaminoxy)propanoat, 1,6 - Hexamethylen - bis[3 - (N,N - dibenzylaminoxy)propanoat], Methyl - 2 - methyl - 3 - (N,N - dibenzylaminoxy)propanoat, Octadecyl - 3 - (N,N - dibenzylaminoxy)propanoat, Tetrakis[(N,N - dibenzylaminoxy)ethylcarbonyloxy-methyl]methan, Octadecyl - 3 - (N,N - diethylaminoxy)propanoat oder 1,6 - Hexamethylen - bis[3 - (N - allyl - N - dodecylaminoxy)propanoat] ist.

Ein weiterer Gegenstand dieser Erfindung sind neue Aminoxypropanoate der Formel IA,

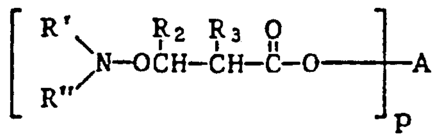

(IA)

worin p eine ganze Zahl von 2 bis 4 ist, R', R'', $R_2$ und $R_3$ die oben angegebenen Bedeutungen haben und A die für n gleich 2 bis 4 angegebenen Definitionen besitzt. Bezüglich der Variablen R', R'', $R_2$, $R_3$ und A gelten für die Verbindungen der Formel IA dieselben Bevorzugungen wie für die Verbindungen der Formel I.

Bevorzugte Beispiele für Verbindungen der Formel IA sind: 1,6-Hexamethylen-bis[3-(N,N-dibenzylaminoxy)propanoat], Tetrakis[(N,N-dibenzylaminoxy)ethylcarbonyloxymethyl]methan und 1,6-Hexamethylen-bis[3-(N-allyl-N-dodecylaminoxy)propanoat].

Die Verbindungen der Formeln I und IA können in Analogie zu bekannten Verfahren hergestellt werden, beispielsweise durch Umsetzung von einer Verbindung der Formel II,

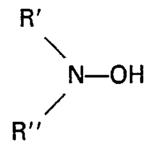

(II)

mit einer Verbindung der Formel III bzw. IIIA,

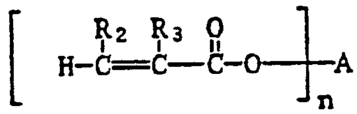

(III)

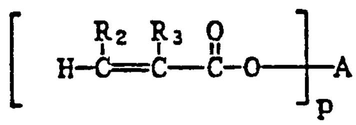

(IIIA)

wobei R', R'', $R_2$, $R_3$, A, n und p die oben angegebenen Definitionen mit Ausnahme von A gleich Wasserstoff, Alkali- und Erdalkalimetall besitzen.

Beispiele für Verbindungen der Formeln III und IIIA sind Acrylate, Methacrylate und Crotonate, insbesondere 1,6-Hexandioldiacrylat.

Bevorzugte Beispiele für Verbindungen der Formel III sind Methylacrylat, Methylmethacrylat, Ethylacrylat, Butylacrylat, Octylacrylat und Octadecylacrylat.

Die Umsetzung wird bevorzugt unter Stickstoff und gegebenenfalls in einem organischen Lösungsmittel durchgeführt. Als geeignete Lösungsmittel seien genannt: Aromatische Kohlenwasserstoffe, wie beispielsweise Benzol, Toluol, Xylol und dergleichen, oder heterocyclische Ether, wie zum Beispiel Tetrahydrofuran, oder "niedere" Alkohole, wie beispielsweise Ethanol.

Die Reaktionstemperatur liegt im allgemeinen in einem Temperaturbereich von 25° bis 150°C.

Eine bevorzugte Herstellungsmethode ist die Umsetzung des Hydroxylamins der Formel II mit dem entsprechenden Acrylat der Formel III bzw. IIIA in Gegenwart eines Katalysators, wie beispielsweise Alkalihydroxid oder Alkalialkoxid. Besonders bevorzugt als Katalysator ist Kalium-tert-butoxid.

Die freien Säuren der Formel I (A = H) können in an sich bekannter Weise durch Verseifung der Esters hergestellt werden.

Die Alkalimetallsalze der vorliegenden Verbindungen können z.B. durch Umsetzung der Alkylester mit einem Alkali-trimethylsilanolat gegebenenfalls in einem organischen Lösungsmittel, z.B. Toluol, hergestellt werden. Die Umsetzung wird vorzugsweise bei Raumtemperatur durchgeführt.

Bedeutet A ein Erdalkalimetall, so können die Verbindungen der Formel I bzw. IA z.B. durch Umsetzung der Verbindung der Formel

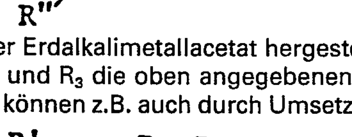

mit einem Erdalkalimetallchlorid oder Erdalkalimetallacetat hergestellt werden, wobei A' ein Alkalimetall, bevorzugt Kalium, ist und R', R'', $R_2$ und $R_3$ die oben angegebenen Bedeutungen haben.

Die Verbindungen der Formel IA können z.B. auch durch Umsetzung eines Säurechlorids der Formel IV

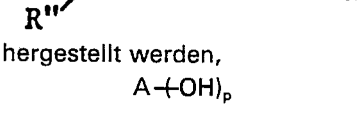

(IV)

mit einem Alkohol der Formel (V) hergestellt werden,

$$A\text{-}(OH)_p \qquad (V)$$

wobei R', R'', $R_2$, $R_3$, A und p die oben angegebenen Definitionen besitzen. Als Beispiele für Polyole der Formel V seien genannt: Ethylenglykol, Hexandiol, Trimethylolpropan, 1,2,3-Propantriol, Neopentylglycol und Pentaerythrit. Die Umsetzung findet gegebenenfalls in einem organischen Lösungsmittel, wie z.B. Methylenchlorid, statt und wird zweckmässigerweise bei Raumtemperatur durchgeführt.

Die Säurechloride der Formel IV können in Analogie zu bekannten Verfahren z.B. durch Umsetzung der freien Säure der Formel I, worin A Wasserstoff ist, mit Oxalylchlorid oder Thionylchlorid in einem organischen Lösungsmittel, z.B. Methylenchlorid, hergestellt werden. Die Reaktionstemperatur liegt vorzugsweise bei 0° bis 5°C.

In den oben beschriebenen Herstellungsverfahren können die Reagentien in stöchiometrischem Verhältnis oder mit einem Ueberschuss an einem der beiden Reagentien eingesetzt werden.

Die Ausgangsprodukte zur Herstellung der Verbindungen der Formeln I und IA sind bekannt, im Handel erhältlich oder können in Analogie zu bekannten Verfahren hergestellt werden.

Die Verbindungen der Formeln I und IA eignen sich als Stabilisatoren für eine Reihe von organischen Materialien, wie beispielsweise Kunststoffe, Polymere und Harze, insbesondere.

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der untere 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Ethern, wie Polyalkylenglkykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern, wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren, wie z.B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellithate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Bevorzugt werden die Verbindungen der Formeln I und IA in synthetischen Polymeren, insbesondere Polyolefin-Homopolymeren oder -Copolymeren, eingesetzt.

Besonders bevorzugt werden die Verbindungen der Formeln I und IA in Polyolefinen, wie beispielsweise Polyethylen und Polypropylen, Polystyrol, einschliesslich schlagfestem Polystyrol, Acrylnitril-Butadien-Styrol-Harz (ABS), Styrol-Butadien-Kautschuk (SBR), Isopren als auch natürlichem Kautschuk, Polyester, einschliesslich Polyethylenterephthalat und Polybutadienterephthalat sowie deren Copolymeren, und in Schmierölen, die beispielsweise aus Mineralölen hergestellt werden, eingesetzt.

Im allgemeinen können die Verbindungen der Formeln I und IA in Konzentrationen von ~0,01 bis ~5 Gew.-%, bezogen auf die stabilisierte Zusammensetzung, eingesetzt werden; allerdings kann je nach Verwendung und Substrat die Stabilisatormenge variieren. Bevorzugt verwendet man ~0,5 bis 2 Gew.-%, insbesondere 0,1 bis 1 Gew.%.

Die Einarbeitung der Verbindungen der Formel I oder IA in das organische Material kann nach bekannten Methoden während jeder Verarbeitungsstufe vor der Formgebung erfolgen. Der Stabilisator kann beispielsweise in Pulverform dem organischen Material zugemischt werden oder eine Emulsion oder Suspension des Stabilisators kann mit einer Lösung, Suspension oder Emulsion des organischen Materials vermischt werden.

Die stabilisierten Zusammensetzungen dieser Erfindung können gegebenenfalls auch herkömmliche Additive enthalten.

Beispiele für herkömmliche Additive sind:

1. Antioxidantien

*1.1. Alkylierte Monophenole*, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol.

*1.2. Alkylierte Hydrochinone*, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

*1.3. Hydroxylierte Thiodiphenylether*, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

*1.4. Alkyliden-Bisphenole*, z.B. 2,2' - Methylen - bis - (6 - tert.butyl - 4 - methylphenol), 2,2' - Methylen - bis - (6 - tert.butyl - 4 - ethylphenol), 2,2' - Methylen - bis - [4 - methyl - 6 - (α - methylcyclohexyl) - phenol], 2,2' - Methylen - bis - (4 - methyl - 6 - cyclohexylphenol), 2,2' - Methylen - bis -

(6 - nonyl - 4 - methylphenol), 2,2' - Methylen - bis - (4,6 - di - tert.butylphenol), 2,2' - Ethyliden - bis - (4,6 - di - tert.butylphenol), 2,2' - Ethyliden - bis - (6 - tert.butyl - 4 - isobutylphenol), 2,2' - Methylen - bis - [6 - (α - methylbenzyl) - 4 - nonylphenol], 2,2' - Methylen - bis - [6 - (α,α - dimethylbenzyl)-4 - nonylphenol], 4,4' - Methylen - bis - (2,6 - di - tert.butylphenol), 4,4' - Methylen - bis - (6 - tert.butyl - 2 - methylphenol), 1,1 - Bis - (5 - tert.butyl - 4 - hydroxy - 2 - methylphenyl) - butan, 2,6 - Di - (3 - tert.butyl - 5 - methyl - 2 - hydroxybenzyl) - 4 - methylphenol, 1,1,3 - Tris - (5 - tert.butyl - 4 - hydroxy - 2 - methylphenyl) - butan, 1,1 - Bis - (5 - tert.butyl - 4 - hydroxy - 2 - methylphenyl) - 3 - n - dodecylmercaptobutan, Ethylenglycol - bis - [3,3 - bis - (3' - tert.butyl - 4' - hydroxyphenyl) - butyrat], Di - (3 - tert.butyl - 4 - hydroxy - 5 - methylphenyl) - dicyclopentadien, Di - [2 - (3' - tert.butyl - 2' - hydroxy - 5' - methyl - benzyl) - 6 - tert.butyl - 4 - methyl - phenyl] - terephthalat.

*1.5. Benzylverbindungen,* z.B. 1,3,5 - Tri - (3,5 - di - tert.butyl - 4 - hydroxybenzyl) - 2,4,6 - trimethylbenzol, Di - (3,5 - di - tert.butyl - 4 - hydroxybenzyl) - sulfid, 3,5 - Di - tert.butyl - 4 - hydroxybenzyl - mercaptoessigsäure - isooctylester, Bis - (4 - tert.butyl - 3 - hydroxy - 2,6 - dimethylbenzyl)dithiol - terephthalat, 1,3,5 - Tris - (3,5 - di - tert.butyl - 4 - hydroxybenzyl) - isocyanurat, 1,3,5 - Tris - (4 - tert.butyl - 3 - hydroxy - 2,6 - dimethylbenzyl) - isocyanurat, 3,5 - Di - tert.butyl - 4 - hydroxybenzyl - phosphonsäure - dioctadecylester, 3,5 - Di - tert.butyl - 4 - hydroxybenzyl - phosphonsäure - monoethylester, Calcium-salz.

*1.6. Acylaminophenole,* z.B. 4 - Hydroxy - laurinsäureanilid, 4 - Hydroxystearinsäureanilid, 2,4 - Bis - octylmercapto - 6 - (3,5 - di - tert.butyl - 4 - hydroxyanilino) - s - triazin, N - (3,5 - di - tert.butyl - 4 - hydroxyphenyl)carbaminsäureoctylester.

*1.7. Ester der β-(3,5-Di-tert.butyl-4-hydroxyphenyl)-propionsäure* mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxalsäurediamid.

*1.8. Ester der β-(5-tert.Butyl-4-hydroxy-3-methylphenyl)-propionsäure* mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxalsäurediamid.

*1.9. Amide der β - (3,5 - Di - tert.butyl - 4 - hydroxyphenyl) - propionsäure,* wie z.B. N,N' - Di - (3,5 - di - tert.butyl - 4 - hydroxyphenylpropionyl) - hexamethylendiamin, N,N' - Di - (3,5 - di - tert.butyl - 4 - hydroxyphenylpropionyl) - trimethylendiamin, N,N' - Di - (3,5 - di - tert.butyl - 4 - hydroxyphenylpropionyl) - hydrazin.

2. UV-Absorber und Lichtschutzmittel

*2.1. 2-(2'-Hydroxyphenyl)-benztriazole,* wie z.B. das 5'-Methyl-, 3',5'-Di-tert.butyl-, 5'-tert.-Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

*2.2. 2-Hydroxybenzophenone,* wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

*2.3. Ester von gegebenenfalls substituierten Benzoesäuren,* wie z.B. 4-tert.Butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

*2.4. Acrylate,* wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

*2.5. Nickelverbindungen,* wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenylundecylketonoxim, Nickelkomplexe des 1-Phenyl-4-lauroyl-5-hydroxypyrazols, gegebenenfalls mit zusätzlichen Liganden.

*2.6. Sterisch gehinderte Amine,* wie z.B. Bis - (2,2,6,6 - tetramethylpiperidyl) - sebacat, Bis - (1,2,2,6,6 - pentamethylpiperidyl) - sebacat, n - Butyl - 3,5 - di - tert.butyl - 4 - hydroxybenzyl - malonsäure - bis(1,2,2,6,6 - pentamethylpiperidyl) - ester, Kondensationsprodukt aus 1 - Hydroxyethyl - 2,2,6,6 - tetramethyl - 4 - hydroxypiperidin und Bersteinsäure, Kondensationsprodukt aus N,N' - (2,2,6,6 - Tetramethyl - 4 - piperidyl)hexamethylendiamin und 4 - tert.Octylamino - 2,6 - dichlor - 1,3,5 - s - triazin, Tris - (2,2,6,6 - tetramethyl - 4 - piperidyl) - nitrilotriacetat, Tetrakis - (2,2,6,6 - tetramethyl - 4 - piperidyl) - 1,2,3,4 - butantetracarbonsäure, 1,1' - (1,2 - Ethandiyl) - bis - (3,3,5,5 - tetramethyl - piperazinon).

*2.7. Oxalsäurediamide,* wie z.B. 4,4' - Di - octyloxy - oxanilid, 2,2' - Dioctyloxy - 5,5' - di - tert.butyl - oxanilid, 2,2' - Di - dodecyloxy - 5,5' - di - tert.butyl - oxanilid, 2 - Ethoxy - 2' - ethyl - oxanilid, N,N' - Bis - (3 - dimethylaminopropyl) - oxalamid, 2 - Ethoxy - 5 - tert.butyl - 2' - ethyloxanilid und dessen Gemisch mit 2 - Ethoxy - 2' - ethyl - 5,4' - di - tert.butyl - oxanilid, Gemische von o- und p-Methoxy- sowie von o- und p-Ethoxy-di-substituierten Oxaniliden.

3. *Metalldesaktivatoren*, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloyl-amino-1,2,4-triazol, Bis-benzyliden-oxalsäuredihydrazid.

4. *Phosphite und Phosphonite*, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris - (2,4 - di - tert.butylphenyl) - phosphit, Diisodecylpentaerythrit-diphosphit, Di - (2,4 - di - tert.butylphenyl) - pentaerythritdiphosphit, Tristearyl-sorbit-triphosphit, Tetrakis - (2,4 - di - tert.butylphenyl) - 4,4' - biphenylen - diphosphonit, 3,9 - Bis - (2,4 - di - tert.butylphenoxy - 2,4,8,10 - tetraoxa - 3,9 - diphosphaspiro[5.5]undecan.

5. *Peroxidzerstörende Verbindungen*, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecyl-mercapto)-propionat.

6. *Polyamidstabilisatoren*, wie z.B. Kupfersalze in Kombination mit Jodiden und/oder Phosphorverbindungen und Salze des zweiwertigen Mangans.

7. *Basische Co-Stabilisatoren*, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. *Nukleierungsmittel*, wie z.B. 4-tert.Butylbenzoesäure, Adipinsäure, Diphenylessigsäure.

9. *Füllstoffe und Verstärkungsmittel*, wie z.B. Calciumcarbonat, Silikate, Glasfasern, Asbest, Talk, Kaolin, Glimmer, Bariumsulfat, Metalloxide und -hydroxide, Russ, Graphit.

10. *Sonstige Zusätze*, wie z.B. Weichmacher, Gleitmittel, Emulgatoren, Pigmente, Optische Aufheller, Flammschutzmittel, Antistatika, Treibmittel.

Die Verbindungen der Formel I oder IA eignen sich sowohl allein als auch in Kombination mit anderen Additiven als Stabilisatoren für eine Reihe von Substraten, insbesondere Polyolefinen, die gegebenenfalls Alkalimetall-, Erdalkalimetall- oder Aluminiumsalze von höheren Fettsäuren (Beispiele sind die oben unter Punkt 7 aufgeführten Additive) und/oder gehinderte phenolische Antioxidantien enthalten können. Die Aminoxypropanoate der Formeln I und IA vermindern sehr wirksam Verfärbungen, die auf die Anwesenheit von Phenolen zurückzuführen sind. Solche phenolischen Antioxidantien sind beispielsweise: n - Octadecyl - 3,5 - di - tert - butyl - 4 - hydroxyhydrocinnamat, Neopentantetrayl - tetrakis(3,5 - di - tert - butyl - 4 - hydroxyhydrocinnamat), Di - n - octadecyl - 3,5 - di - tert - butyl - 4 - hydroxybenzylphosphonat, 1,3,5 - Tris(3,5 - di - tert - butyl - 4 - hydroxybenzyl)isocyanurat, Thiodiethylen - bis(3,5 - di - tert - butyl - 4 - hydroxyhydrocinnamat), 1,3,5 - Trimethyl - 2,4,6 - tris(3,5 - di - tert - butyl - 4 - hydroxybenzyl)benzol, 3,6 - Dioxaoctamethylen - bis(3 - methyl - 5 - tert - butyl - 4 - hydroxyhydrocinnamat), 2,6 - Di - tert - butyl - p - cresol, 2,2' - Ethyliden - bis(4,6 - di - tert - butylphenol), 1,3,5 - Tris(2,6 - dimethyl - 4 - tert - butyl - 3 - hydroxybenzyl)isocyanurat, 1,1,3 - Tris(2 - methyl - 4 - hydroxy - 5 - tert - butylphenyl)butan, 1,3,5 -Tris[2-(3,5-di-tert-butyl-4-hydroxyhydrocinnamoyloxy)-ethyl]isocyanurat, 3,5 - Bis(3,5 - di - tert - butyl - 4 - hydroxybenzyl)mesitol, Hexamethylen - bis(3,5 - di - tert - butyl - 4 - hydroxyhydrocinnamat), 1 - (3,5 - Di - tert - butyl - 4 - hydroxyanilino) - 3,5 - bis(octylthio) - s - triazine, N,N' - Hexamethylen - bis(3,5 - di - tert - butyl - 4 - hydroxyhydrocinnamamid), Kalzium - bis(ethyl - 3,5 - di - tert - butyl - 4 - hydroxybenzylphosphonat), Ethylen - bis[3,3 - bis(3 - tert - butyl - 4 - hydroxyphenyl)butyrat], Octyl - 3,5 - di - tert - butyl - 4 - hydroxy-benzylmercaptoacetat, Bis(3,5 - di - tert - butyl - 4 - hydroxyhydrocinnamoyl)hydrazid und N,N' - Bis[2 - (3,5 - di - tert - butyl - 4 - hydroxyhydrocinnamoyloxy)ethyl]oxamid, insbesondere Neopentantetrayl - tetrakis(3,5 - di - tert - butyl - 4 - hydroxyhydrocinnamat), n - Octadecyl - 3,5 - di - tert - butyl - 4 - hydroxyhydrocinnamat), 1,3,5 - Trimethyl - 2,4,6 - tris(3,5 - di - tert - butyl - 4 - hydroxybenzyl)benzol, 1,3,5 -Tris(3,5 - di - tert - butyl - 4 - hydroxybenzyl)isocyanurat, 2,6 - di - tert - butyl - p - cresol oder 2,2' - Ethyliden - bis(4,6 - di - tert - butylphenol).

Die Verbindungen der Formel I oder IA verhindern auch Verfärbungen, die auf die Anwesenheit von gehinderten Amin-Lichtstabilisatoren zurückzuführen sind, wie beispielsweise.

Bis(1,2,2,6,6 - pentamethyl - 4 - piperidyl) - 2 - n - butyl - 2 - (3,5 - di - tert - butyl - 4 - hydroxybenzyl)malonat, Bis(2,2,6,6 - tetramethyl - 4 - piperidyl)sebacat, Umsetzungsprodukt von Dimethylsuccinat mit 1-Hydroxyethyl-2,2,6,6-tetramethyl-4-hydroxypiperidin und Umsetzungsprodukt von 2,4-Dichloro-6-octylamino-s-triazin mit N,N'-(2,2,6,6-Tetramethyl-4-piperidyl)hexamethylendiamin.

Die folgenden Beispiele erläutern die Erfindung weiter. Alle Mengenangaben beziehen sich auf das Gewicht, soweit nicht anders angegeben.

## Beispiel 1

Herstellung von Methyl-3-(N,N-dibenzylaminoxy)propanoat

In einer Stickstoffatmosphäre wird eine Lösung von 42,6 g N,N-Dibenzylhydroxylamin, 25,8 g Methylacrylat und 2,0 g Kaldium-tert-butoxid in 200 ml Tetrahydrofuran unter Rückfluss 12 Stunden erhitzt. Das Reaktionsgemisch wird unter vermindertem Druck konzentriert und der Rückstand wird mit einem Ether/Wasser-Gemisch aufgenommen. Die organische Phase wird mit Wasser, einer gesättigten $NaHSO_4$

Lösung und einer Kochsalzlösung gewaschen, über $MgSO_4$ getrocknet und im Vakuum eingeengt. Das Produkt liegt als Oel vor.

Elementaranalyse

| | | | |
|---|---|---|---|
| Berechnet für $C_{18}H_{21}NO_3$: | C 72,2; | H 7,1; | N 4,7 |
| Gefunden: | C 72,2; | H 7,1; | N 4,7. |

Beispiel 2

Herstellung von Ethyl-3-(N,N-dibenzylaminoxy)propanoat

Die Herstellung erfolgt in Analogie zu Beispiel 1. Es werden 21,33 g N,N-Dibenzylhydroxylamin, 10,33 g Methylacrylat und 1 g Kalium-tert-butoxid in 100 ml Ethanol eingesetzt. Das Produkt liegt als farblose Flüssigkeit vor.

Elementaranalyse

| | | | |
|---|---|---|---|
| Berechnet für $C_{19}H_{23}NO_3$: | C 72,8; | H 7,4; | N 4,5 |
| Gefunden: | C 72,4; | H 7,5; | N 4,4. |

Beispiel 3

Herstellung von 1,6-Hexamethylen-bis[3-(N,N-dibenzylaminoxy)propanoat

Die Herstellung erfolgt in Analogie zu Beispiel 1. Es werden 21,33 g N,N-Dibenzylhydroxylamin, 11,30 g 1,6-Hexandioldiacrylat und 1,16 g Kalium-tert-butoxid in 150 ml Tetrahydrofuran eingesetzt. Das Produkt liegt als farblose Flüssigkeit vor.

Elementaranalyse

| | | | |
|---|---|---|---|
| Berechnet für $C_{40}H_{48}N_2O_6$: | C 73,6; | H 7,4; | N 4,3 |
| Gefunden: | C 73,8; | H 7,7; | N 4,4. |

Beispiel 4

Herstellung von Methyl-2-methyl-3-(N,N-dibenzylaminoxy)propanoat

Die Herstellung erfolgt in Analogie zu Beispiel 1. Es werden 10,66 g N,N-Dibenzylhydroxylamin, 7,5 g Methylmethacrylat und 0,50 g Kalium-tert-butoxid in 150 ml Tetrahydrofuran eingesetzt. Das Produkt liegt als blass gelbe Flüssigkeit vor.

Elementaranalyse

| | | | |
|---|---|---|---|
| Berechnet für $C_{19}H_{23}NO_3$: | C 72,8; | H 7,4; | N 4,5 |
| Gefunden: | C 72,8; | H 7,4; | N 4,4. |

Beispiel 5

Herstellung von n-Octadecyl-3-(N,N-dibenzylaminoxy)propanoat

Die Herstellung erfolgt in Analogie zu Beispiel 1. Es werden 10,66 g N,N-Dibenzylhydroxylamin, 16,03 g n-Octadecylacrylat und 0,50 g Kalium-tert-butoxid in 100 ml Tetrahydrofuran eingesetzt. Das Produkt liegt als farbloses Oel vor.

Elementaranalyse

| | | | |
|---|---|---|---|
| Berechnet für $C_{35}H_{55}NO_3$: | C 78,2; | H 10,3; | N 2,6 |
| Gefunden: | C 78,0; | H 10,2; | N 2,6. |

Beispiel 6

Herstellung von 3-(N,N-Dibenzylaminoxy)propionsäure

In einer Stickstoffatmosphäre wird eine Lösung von 22,4 g Methyl-3-[N,N-dibenzylaminoxy]propionat und 4,50 g Kaliumhydroxid in 200 ml Tetrahydrofuran und 200 ml Wasser 12 Stunden unter Rückfluss erhitzt. Die Mischung wird unter vermindertem Druck eingeengt und der Rückstand wird mit einem Ether/Wasser-Gemisch aufgenommen. Die wässrige Phase wird mit Salzsäure angesäuert und dann mit Methylenchlorid extrahiert. Die organischen Phasen werden vereinigt, über $MgSO_4$ getrocknet und unter vermindertem Druck eingeengt. Das Produkt liegt als blass gelbes Oel vor.

Elementaranalyse

| | | | |
|---|---|---|---|
| Berechnet für $C_{17}H_{19}NO_3 \cdot 0{,}5\ H_2O$: | C 69,3; | H 7,1; | N 4,8 |
| Gefunden: | C 69,4; | H 6,9; | N 4,7. |

Beispiel 7

Herstellung von Tetrakis[(N,N-dibenzylaminoxy)ethylcarbonyloxymethyl]methan

Eine Lösung von 11,8 g der Verbindung aus Beispiel 6 in 25 ml Methylenchlorid wird mit 3,2 ml Oxalylchlorid bei 0 bis 5°C gemischt. Nach 2 Stunden werden 1,10 g Pentaerythrit hinzugegeben und das Reaktionsgemisch wird bei Raumtemperatur 12 Stunden gerührt. Dann wird das Reaktionsgemisch mit ca. 120 ml Methylenchlorid verdünnt, mit 1N NaOH Lösung und einer Salzlösung gewaschen, über $MgSO_4$ getrocknet und eingeengt. Man erhält ein gelbes Oel. Nach chromatographischer Reinigung (Flüssigkeitschromatographie) liegt das Produkt als farbloses Oel vor.

Elementaranalyse

| | | | |
|---|---|---|---|
| Berechnet für $C_{37}H_{80}N_4O_{12}$: | C 72,7; | H 6,7; | N 4,7 |
| Gefunden: | C 72,5; | H 6,6; | N 5,0. |

Beispiel 8

Herstellung von n-Octadecyl-3-(N,N-diethylaminoxy)propanoat

Die Herstellung erfolgt in Analogie zu Beispiel 1. Es werden 4,46 g N,N-Diethylhydroxylamin, 16,03 g n-Octadecylacrylat und 0,56 g Kalium-tert-butoxid in 100 ml Tetrahydrofuran eingesetzt. Das Produkt liegt als farblose Flüssigkeit vor.

Elementaranalyse

| | | | |
|---|---|---|---|
| Berechnet für $C_{25}H_{51}NO_3$: | C 72,6; | H 12,4; | N 3,4 |
| Gefunden: | C 72,7; | H 12,1; | N 3,3. |

Beispiel 9

Herstellung von Kalium-3-(N,N-dibenzylaminoxy)propanoat

Unter Rühren werden 3,85 g Kaliumtrimethylsilanolat zu 9,75 g der Verbindung aus Beispiel 1 in 100 ml Toluol gegeben. Anschliessend wird die Mischung 12 Stunden bei Raumtemperatur gerührt. Dann wird das Gemisch bei vermindertem Druck eingeengt. Der Rückstand wird mit Ether pulverisiert. Das Produkt ist ein weisser, hygroskopischer Feststoff.

Beispiel 10

Herstellung von 1,6-Hexamethylen-bis[3-(N-allyl-N-dodecylaminoxy)propanoat]

Die Herstellung erfolgt in Analogie zu Beispiel 1. Es werden 7,24 g N-Allyl-N-dodecylhydroxylamin, 3,39 g 1,6-Hexandioldiacrylat und 0,67 g Kalium-tert-butoxid in Tetrahydrofuran eingesetzt. Das niedrig schmelzende Produkt liegt halb fest vor.

Elementaranalyse

| | | | |
|---|---|---|---|
| Berechnet für $C_{42}H_{80}N_2O_6$: | C 71,1; | H 11,4; | N 4,0 |
| Gefunden: | C 71,0; | H 11,2; | N 3,8. |

Beispiel 11

Verarbeitungsstabilität von Polypropylen

Die Grundformulierung enthält 100 Teile unstabilisiertes Polypropylen (®Profax 6501, Himont) und 0,1 Teil Kalziumstearat. Die unten angegebenen Stabilisatoren werden in Form einer Lösung dem Polypropylen zugemischt (Lösungsmittel: Methylenchlorid). Das Lösungsmittel wird im Vakuum entfernt. Die stabilisierte Harzformulierung wird bei 100 Umdrehungen pro Minute extrudiert.

Extrusionsbedingungen

| | |
|---|---|
| Zylinder 1 | 232°C |
| Zylinder 2 | 246°C |
| Zylinder 3 | 260°C |
| Düse 1 | 260°C |
| Düse 2 | 260°C |
| Düse 3 | 260°C |

Nach der ersten, dritten und fünften Extrusion werden die Harz-Kügelchen unter Druck bei 193°C zu 3,2 mm dicken Folien verformt.

Der "Yellowness Index" der Proben wird gemäss ASTM D 1925—63 T bestimmt. Niedrige Werte bedeuten eine geringe Verfärbung. Die Ergebnisse sind in den folgenden Tabellen wiedergegeben.

Der Schmelzindex der Proben wird gemäss ASTM 1238—L bestimmt. Höhere Werte bedeuten eine geringere Molmasse und sind ein Hinweis dafür, dass das Polymer abgebaut ist.

Die Ergebnisse der verschiedenen Testserien sind in den folgenden Tabellen aufgeführt.

Serie 1:

| Stabilisator | Extrusionstemperatur 260°C "Yellowness Index" nach der 1. Extrusion | 3. Extrusion | 5. Extrusion |
|---|---|---|---|
| ohne | 4,6 | 4,3 | 4,4 |
| 0,1 % Antioxidans A | 6,3 | 8,8 | 10,0 |
| 0,1 % Antioxidans A plus 0,05 % Beispiel 2 | 4,2 | 3,0 | 4,8 |

Serie 2:

| Stabilisator | Extrusionstemperatur 260°C "Yellowness Index" nach der 1. Extrusion | 3. Extrusion | 5. Extrusion |
|---|---|---|---|
| ohne | -3,5 | -3,4 | -2,7 |
| 0,1 % Antioxidans A | -1,1 | 1,4 | 3,8 |
| 0,1 % Antioxidans A plus 0,05 % Beispiel 3 | -4,5 | -4,0 | -2,9 |
| 0,1 % Antioxidans A plus 0,05 % Beispiel 4 | -3,9 | -5,3 | -2,9 |

Serie 3:

| Stabilisator | Extrusionstemperatur 260°C "Yellowness Index" nach der 1. Extrusion | 3. Extrusion | 5. Extrusion |
|---|---|---|---|
| ohne | 2,5 | 3,5 | 4,7 |
| 0,1 % Antioxidans A | 7,4 | 13,7 | 15,9 |
| 0,1 % Antioxidans A plus 0,05 % Beispiel 7 | 2,3 | 2,4 | 2,4 |

| Stabilisator | "Schmelzindex" in g/10 min nach der 1. Extrusion | 5. Extrusion |
|---|---|---|
| ohne | 6,3 | 14,9 |
| 0,1 % Antioxidans A | 3,4 | 6,9 |
| 0,1 % Antioxidans A plus 0,05 % Beispiel 7 | 3,5 | 4,6 |

Serie 4:

| Stabilisator | Extrusionstemperatur 260°C "Yellowness Index" nach der 1. Extrusion | 3. Extrusion | 5. Extrusion |
|---|---|---|---|
| ohne | 1,6 | 1,1 | 1,3 |
| 0,1 % Antioxidans A | 6,0 | 11,7 | 14,6 |
| 0,1 % Antioxidans A plus 0,05 % Beispiel 5 | 1,1 | 1,2 | 2,1 |
| 0,1 % Antioxidans A plus 0,05 % Beispiel 8 | 1,0 | 3,0 | 6,6 |

| Stabilisator | "Schmelzindex" in g/10 min nach der 1. Extrusion | 5. Extrusion |
|---|---|---|
| ohne | 1,3 | 12,5 |
| 0,1 % Antioxidans A | 4,0 | 5,9 |
| 0,1 % Antioxidans A plus 0,05 % Beispiel 5 | 2,6 | 4,2 |
| 0,1 % Antioxidans A plus 0,05 % Beispiel 8 | 2,5 | 4,2 |

Serie 5:

| Stabilisator | Extrusionstemperatur 260°C "Yellowness Index" nach der | | |
|---|---|---|---|
| | 1. Extrusion | 3. Extrusion | 5. Extrusion |
| ohne | 4,5 | 4,6 | 5,2 |
| 0,1 % Antioxidans B | 6,1 | 8,7 | 11,0 |
| 0,05 % Antioxidans B plus 0,05 % Beispiel 1 | 4,5 | 5,0 | 6,4 |

| Stabilisator | "Schmelzindex" in g/10 min nach der | |
|---|---|---|
| | 1. Extrusion | 5. Extrusion |
| ohne | 9,5 | 39,0 |
| 0,1 % Antioxidans B | 4,2 | 8,9 |
| 0,05 % Antioxidans B plus 0,05 % Beispiel 1 | 4,5 | 8,2 |

Antioxidans A
Neopentantetrayl-tetrakis[3,5-di-tert-butyl-4-hydroxyhydrocinnamat].

Antioxidans B
Mischung aus Antioxidans A und Tris[2,4-di-tert-butylphenyl]phosphit im Verhältnis 1:1.

Beispiel 12

Gas-Farbbeständigkeitsprüfung von Polypropylenfasern

Die Grundformulierung enthält 100 Teile unstabilisiertes Polypropylen (®Profax 6501, Hercules) und 0,1 Teil Kalziumstearat. In Analogie zu Beispiel 11 erfolgt die Herstellung von stabilisierten Polypropylen-Pellets, welche allerdings bei 260°C bereits nach der ersten Extrusion zu Fasern versponnen werden. Die Fasern werden einem Gas-Farbbeständigkeitstest gemäss der AATCC Prüfmethode 23 (Farbbeständigkeit in Abgasen) unterworfen. Die Prüfung wird in einer AATCC Abgas-Kammer (Drum Modell No. 8727) durchgeführt. Die Verfärbung der Fasern wird vor Beginn der Prüfung und nach zwei, sechs und 24 Stunden in der Abgas-Kammer (60°C) bestimmt. Die Ergebnisse sind in Tabelle 1 aufgeführt, wobei niedrige Zahlen geringe Verfärbung bedeuten.

Tabelle 1:

| Polypropylen-Fasern aus | Visuelle Farbbestimmung nach Stunden in der Abgas-Kammer bei 60°C | | | |
|---|---|---|---|---|
| | 0 | 2 | 6 | 24 |
| Formulierung X | 0 | 2 | 4 | 5 |
| Formulierung X plus 0,25 Gew.% Beispiel 1 | 0 | 0 | 0 | 3 |
| Formulierung X plus 0,50 Gew.% Beispiel 3 | 0 | 0 | 0 | 3 |

*Formulierung X*: Grundformulierung plus 0,25 Gew.-% Neopentantetrayl-tetrakis[3,5-di-tert-butyl-4-hydroxyhydrocinnamat]; 0,25 Gew.% eines Polykondensationsproduktes von 2,4-Dichlor-6-tert-octylamino-1,3,5-triazin und 1,6-Bis[2,2,6,6-tetramethylpiperidinylamino]hexamethylen sowie 0,25 Gew.% Tris[2,4-Di-tert-butylphenyl]phosphit.

Beispiel 13

Lichtstabilität von Polypropylen

Unstabilisiertes Polypropylenpulver (®Hercules Profax 6501) wird mit dem in Tabelle 2 angegebenen Additiv gemischt. Diese Mischung wird bei 182°C 5 Minuten auf einem Mischwalzwerk plastifiziert. Dann löst man die stabilisierte Polypropylenfolie vom Walzwerk ab und lässt sie abkühlen. Die Folie wird in Stücke geschnitten, welche mit einer hydraulischen Presse bei 250°C und 12 bar zu 0,637 mm dicken Filmen verformt werden.

Die Proben werden in einer "fluorescent sunlight/black light chamber" (FS/BL) belichtet. Der Carbonylgehalt der Prüflinge wird mit IR-Spektroskopie bestimmt. Als Mass für die Wirksamkeit des Stabilisators gilt die Zeit bis zum Erreichen einer Carbonylabsorption von 0,5. Die Ergebnisse sind in Tabelle 2 aufgeführt.

Tabelle 2:

| Stabilisator | Stunden bis zum Erreichen einer Carbonylabsorption von 0,5 |
|---|---|
| ohne | 100 |
| 0,3 % Beispiel 2 | 450 |
| 0,3 % Beispiel 3 | 422 |
| 0,2 % Beispiel 5 | 300 |
| 0,2 % Beispiel 8 | 310 |

Beispiel 14

Verhinderung der Oxidation von Petroleum-Turbinenöl

Der Test wird gemäss ASTM D 943—81 durchgeführt. 300 ml 150N paraffinisches Mineralöl, welches 0,25 Gew.% der zu prüfenden Verbindung enthält, und 60 ml destilliertes Wasser werden in eine grosse Glasföhre gefüllt und in einem 95°C heissem Oelbad erhitzt. In das Oel-Wasser-Gemisch wird Sauerstoff (3 l/h) eingeleitet. Als Katalysator befindet sich im Gaseinleitungsrohr eine Eisen-Kupfer-Spirale. In regelmässigen Zeitabständen werden Proben des Oels entnommen und die Säurezahl bestimmt. Als Kriterium für die Stabilisierung des Oels gilt die Zeit bis zum Erreichen einer Säurezahl von 2,0. Die Versuchsergebnisse werden in Tabelle 3 wiedergegeben.

Tabelle 3:

| Stabilisator | Stunden bis zum Erreichen einer Säurezahl von 2,0 |
|---|---|
| ohne | 90-100 |
| Verbindung aus Beispiel 2 | 340 |
| Verbindung aus Beispiel 8 | 125 |

Beispiel 15

TFOUT-Test (Thin-Film Oxygen Uptake Test)

Der Test wird in einer Standardapparatur gemäss ASTM D—2272 durchgeführt. Die Modifikationen in der Durchführung werden in der Kopie Nr. 82 CC—10—1 von der Tagung "Conference of the American Society of Lubrication Engineers, October 5—7, 1982" beschrieben.

Eine Probe (1,5 g) eines 150N paraffinischen Mineralöls, welches 0,5 Gew.% der zu testenden Verbindung und soviel Zinkdialkyldithiophosphat enthält, wie 0,1 Gew.% Zink entspricht, wird in die Versuchsapparatur gegeben. Eine Katalysatormischung, die 0,075 g von oxidierten Treibstoffkomponenten, 0,075 g eines löslichen Metallkatalysators*) und 0,030 g Wasser enthält, wird hinzugefügt. Die Temperatur wird auf 160°C eingestellt und der anfängliche Sauerstoffdruck beträgt 6,2 bar. Als Kriterium für die Stabilisierung des Mineralöls gilt die Zeit in Minuten bis zu einem Druckabfall von 1,72 bar. Die Versuchsergebnisse werden in Tabelle 4 wiedergegeben.

Tabelle 4:

| Stabilisator | Zeit in Minuten bis zu einem Druckabfall von 1,72 bar |
|---|---|
| ohne | 105 |
| Verbindung aus Beispiel 2 | 118 |
| Verbindung aus Beispiel 8 | 137 |

*) Bei dem löslichen Metallkatalysator handelt es sich um ein Gemisch aus Metallnaphthenaten (0,69 Gew.% Kupfer-, 0,41 Gew.% Eisen-, 8,0 Gew.% Blei-, 0,35 Gew.% Mangan- und 0,36 Gew.% Zinnaphthenat.

**Patentansprüche**

1. Zusammensetzungen enthaltend ein gegen oxidativen, thermischen und/oder aktinischen Abbau empfindliches organisches Material und mindestens eine Verbindung der Formel I,

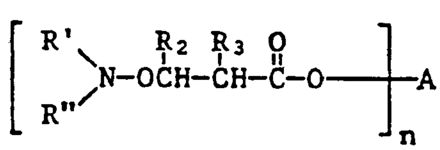

(I)

worin n eine ganze Zahl von 1 bis 4 ist, R' und R'' unabhängig voneinander Wasserstoff, $C_1$—$C_{36}$-Alkyl,

Allyl, $C_5$—$C_{12}$-Cycloalkyl, $C_7$—$C_9$-Aralkyl oder durch $C_1$—$C_{36}$-Alkyl substituiertes $C_7$—$C_9$-Aralkyl bedeuten, $R_2$ und $R_3$ unabhängig voneinander Wasserstoff, $C_1$—$C_{12}$-Alkyl oder Aryl sind und wenn n 1 ist, A Wasserstoff, Alkalimetall, $C_1$—$C_{36}$-Alkyl, $C_2$—$C_6$-Alkoxyalkyl, $C_5$—$C_{12}$-Cycloalkyl, $C_7$—$C_9$-Aralkyl, durch $C_1$—$C_{36}$-Alkyl substituiertes $C_7$—$C_9$-Aralkyl, Aryloxy-($C_2$—$C_6$-alkyl) oder ein 5- bis 7-gliedriger heterocyclischer Ring ist, wenn n 2 bedeutet, A ein Erdalkalimetall, $C_2$—$C_{12}$-Alkylen, $C_6$—$C_{10}$-Cycloalkylen, $C_6$—$C_{10}$-Arylen, eine Gruppe

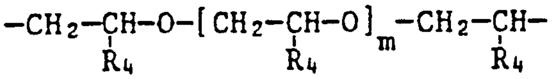 ,

worin m 1 oder 2 ist und $R_4$ Wasserstoff oder Methyl bedeutet, oder eine Gruppe

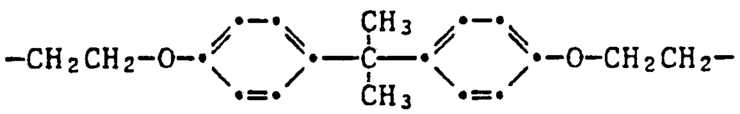 ist

ist,

wenn n 3 ist, A $C_3$—$C_{12}$-Alkantriyl oder durch ein oder mehrere Sauerstoffatome unterbrochenes $C_3$—$C_{12}$-Alkantriyl bedeutet und wenn n 4 ist, A $C_4$—$C_6$-Alkantetrayl bedeutet.

2. Zusammensetzungen gemäss Anspruch 1, worin R′ und R″ unabhängig voneinander Wasserstoff, $C_1$—$C_{18}$-Alkyl, Cyclopentyl, Cyclohexyl, Benzyl, α-Methylbenzyl oder α,α-Dimethylbenzyl bedeuten und $R_2$ und $R_3$ unabhängig voneinander Wasserstoff oder $C_1$—$C_4$-Alkyl sind.

3. Zusammensetzungen gemäss Anspruch 2, worin R′ und R″ Benzyl bedeuten und $R_2$ und $R_3$ Wasserstoff sind.

4. Zusammensetzungen gemäss Anspruch 1, worin n 1 bedeutet und A $C_1$—$C_{18}$-Alkyl ist.

5. Zusammensetzungen gemäss Anspruch 1, worin n 1 bedeutet und A Wasserstoff bedeutet.

6. Zusammensetzungen gemäss Anspruch 1, worin n 2 bedeutet und A $C_2$—$C_6$-Alkylen, Cyclohexylen, Phenylen oder Xylylen bedeutet.

7. Zusammensetzungen gemäss Anspruch 1, worin n 3 bedeutet und A Glyceryl oder Trimethylylpropan bedeutet.

8. Zusammensetzungen gemäss Anspruch 1, worin n 4 bedeutet und A Pentaerythrityl bedeutet.

9. Zusammensetzungen gemäss Anspruch 1, worin die Verbindung der Formel I Methyl-3-(N,N-dibenzylaminoxy)propanoat, Ethyl-3-(N,N-dibenzylaminoxy)propanoat, 1,6-Hexamethylen-bis[3-(N,N-dibenzylaminoxy)propanoat], Methyl-2-methyl-3-(N,N-dibenzylaminoxy)propanoat, Octadecyl-3-(N,N-dibenzylaminoxy)propanoat, Tetrakis[(N,N-dibenzylaminoxy)ethylcarbonyloxymethyl]methan, Octadecyl-3-(N,N-diethylaminoxy)propanoat oder 1,6-Hexamethylen-bis[3-(N-allyl-N-dodecylaminoxy)propanoat] ist.

10. Zusammensetzungen gemäss Anspruch 1, worin das organische Material ein synthetisches Polymer ist.

11. Zusammensetzungen gemäss Anspruch 10, worin das synthetische Polymer ein Polyolefin-Homopolymer oder -Copolymer ist.

12. Zusammensetzungen gemäss Anspruch 1, die zusätzlich ein Metallsalz einer höheren Fettsäure und/oder ein phenolisches Antioxidans enthalten.

13. Verwendung von Verbindungen der Formel I gemäss Anspruch 1 zum Stabilisieren von organischem Material gegen oxidativen, thermischen und/oder aktinischen Abbau.

14. Verbindungen der Formel IA,

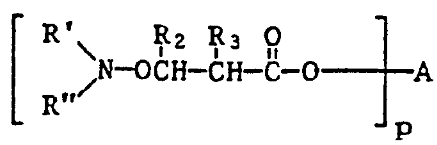 (IA)

worin p eine ganze Zahl von 2 bis 4 ist, R′ und R″ unabhängig voneinander Wasserstoff, $C_1$—$C_{36}$-Alkyl, Allyl, $C_5$—$C_{12}$-Cycloalkyl, $C_7$—$C_9$-Aralkyl oder durch $C_1$—$C_{36}$-Alkyl substituiertes $C_7$—$C_9$-Aralkyl bedeuten, $R_2$ und $R_3$ unabhängig voneinander Wasserstoff, $C_1$—$C_{12}$-Alkyl oder Aryl sind und wenn p 2 bedeutet, A ein Erdalkalimetall, $C_2$—$C_{12}$-Alkylen, $C_6$—$C_{10}$-Cycloalkylen, $C_6$—$C_{10}$-Arylen, eine Gruppe

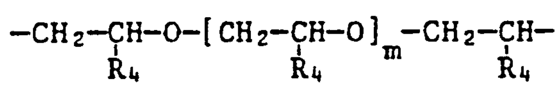 ,

worin m 1 oder 2 ist und $R_4$ Wasserstoff oder Methyl bedeutet, oder eine Gruppe

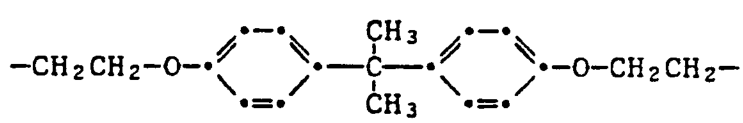 ist

wenn p 3 ist, A $C_3$—$C_{12}$-Alkantriyl oder durch ein oder mehrere Sauerstoffatome unterbrochenes $C_3$—$C_{12}$-Alkantriyl bedeutet und wenn p 4 ist, A $C_4$—$C_6$-Alkantetrayl bedeutet.

**Revendications**

1. Compositions qui comprennent une matière organique sensible aux dégradations par oxydation ou sous l'action de la chaleur et/ou d'un rayonnement actinique, avec un ou plusieurs composés de formule I ci-dessous:

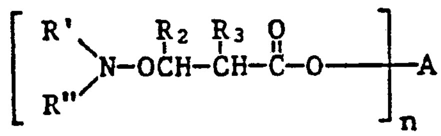

(I)

dans laquelle n est un entier de 1 à 4, R' et R'' représentent chacun, indépendamment l'un de l'autre, l'hydrogène, un alkyle en $C_1$—$C_{36}$, un allyle, un cycloalkyle en $C_5$—$C_{12}$, un aralkyle en $C_7$—$C_9$ avec éventuellement un substituant alkylique en $C_1$—$C_{36}$, $R^2$ et $R^3$ représentent chacun, indépendamment l'un de l'autre, l'hydrogène, un alkyle en $C_1$—$C_{12}$ ou un aryle, et si n = 1, A est l'hydrogène, un métal alcalin, un alkyle en $C_1$—$C_{36}$, un alcoxyalkyle en $C_2$—$C_6$, un cycloalkyle en $C_5$—$C_{12}$, un aralkyle en $C_7$—$C_9$ avec éventuellement un substituant alkylique en $C_1$—$C_{36}$, un aryloxy-($C_2$—$C_6$-alkyle) ou encore un radical hétérocyclique ayant de 5 à 7 chaînons, tandis que si n = 2, A est un métal alcalino-terreux, un alkylène en $C_2$—$C_{12}$, un cycloalkylène en $C_6$—$C_{10}$, un arylène en, $C_6$—$C_{10}$, un groupe:

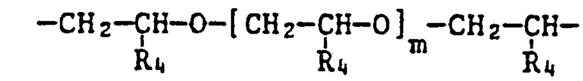

,

m étant le nombre 1 ou 2 et $R_4$ l'hydrogène ou le groupe méthyle, ou encore un groupe:

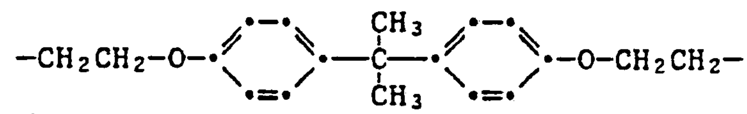

si n = 3, A est un alcane-triyle en $C_3$—$C_{12}$ pouvant être éventuellement interrompu par un ou plusieurs atomes d'oxygène, et enfin, si n = 4, A est un alcane-tétrayle en $C_4$—$C_6$.

2. Compositions selon la revendication 1 dans lesquelles, dans les composés de formule I, R' et R'' sont chacun, indépendamment l'un de l'autre, l'hydrogène, un alkyle en $C_1$—$C_{18}$, un cyclopentyle, un cyclohexyle, un benzyle, un α-méthylbenzyle ou un α,α-diméthylbenzyle, et $R_2$ et $R_3$ sont chacun, indépendamment l'un de l'autre, l'hydrogène ou un alkyle en $C_1$—$C_4$.

3. Compositions selon la revendication 2 dans lesquelles, dans les composés de formule I, R' et R'' sont le groupe benzyle et $R_2$ et $R_3$ l'hydrogène.

4. Compositions selon la revendication 1 dans lesquelles n = 1 et A est un alkyle en $C_1$—$C_{18}$.

5. Compositions selon la revendication 1 dans lesquelles n = 1 et A est l'hydrogène.

6. Compositions selon la revendication 1 dans lesquelles n = 2 et A est un alkylène en $C_2$—$C_6$, un cyclohexylène, un phénylène ou un xylylène.

7. Compositions selon la revendication 1 dans lesquelles n = 3 et A est le groupe glycéryle ou triméthylylpropane.

8. Compositions selon la revendication 1 dans lesquelles n = 4 et A est le groupe pentaérythrityle.

9. Compositions selon la revendication 1 dans lesquelles le composé de formule I est le 3-(N,N-dibenzylaminoxy)-propanoate de méthyle, le 3-(N,N-dibenzylaminoxy)-propanoate d'éthyle, le bis-[3-(N,N-dibenzylaminoxy)-propanoate] de 1,6-hexaméthylène, le 2-méthyl-3-(N,N-dibenzylaminoxy)-propanoate de méthyle, le 3-(N,N-dibenzylaminoxy)-propanoate d'octadécyle, le tétrakis-[(N,N-dibenzylaminoxy)-éthylcarbonyloxyméthyl]-méthane, le 3-(N,N-diéthylaminoxy)-propanoate d'octadécyle ou le bis-[3-(N-allyl-N-dodécylaminoxy)-propanoate] de 1,6-hexaméthylène.

10. Compositions selon la revendication 1 dont la matière organique est une matière polymère synthétique.

11. Compositions selon la revendication 10 dont la matière polymère synthétique est un homopolymère ou un copolymère d'oléfines.

12. Compositions selon la revendication 1 qui contiennent en outre un sel de métal d'un acide gras supérieur et/ou un antioxydant phénolique.

13. Emploi des composés de formule I selon la revendication 1 pour stabiliser et protéger des matières organiques contre des dégradations par oxydation ou sous l'action de la chaleur et/ou d'un rayonnement actinique.

14. Composés de formule IA:

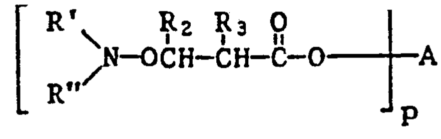

(IA)

dans laquelle p est un entier de 2 à 4, R′ et R″ désignent chacun, indépendamment l'un de l'autre, l'hydrogène, un alkyle en $C_1$—$C_{36}$, un allyle, un cycloalkyle en $C_5$—$C_{12}$ ou un aralkyle en $C_7$—$C_9$ qui a éventuellement comme substituant un alkyle en $C_1$—$C_{36}$, $R_2$ et $R_3$ désignent chacun, indépendamment l'un de l'autre, l'hydrogène, un alkyle en $C_1$—$C_{12}$ ou un aryle, et si p = 2, A est un métal alcalino-terreux, un alkylène en $C_2$—$C_{12}$, un cycloalkylène en $C_6$—$C_{10}$, un arylène en $C_6$—$C_{10}$, un groupe:

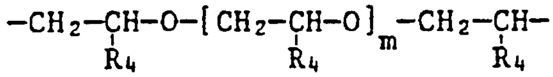 ,

m étant le nombre 1 ou 2 et $R_4$ l'hydrogène ou un méthyle, ou encore A est un groupe:

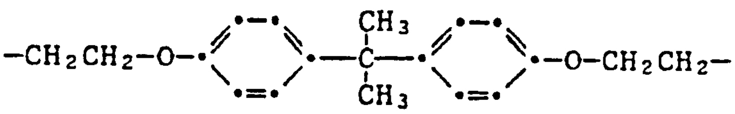

tandis que si p = 3, A est un alcane-triyle en $C_3$—$C_{12}$ pouvant être éventuellement interrompu par un ou plusieurs atomes d'oxygène, et si p = 4, A est un alcane-tétrayle en $C_4$—$C_6$.

**Claims**

1. A composition containing an organic material subject to oxidative, thermal and/or actinic degradation and at least one compound of the formula I

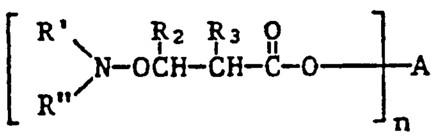 (I)

in which n is an integer from 1 to 4, R′ and R″ are independently of one another hydrogen, $C_1$—$C_{36}$alkyl, allyl, $C_5$—$C_{12}$cycloalkyl, $C_7$—$C_9$aralkyl or $C_1$—$C_{36}$alkyl-substituted $C_7$—$C_9$aralkyl, $R_2$ and $R_3$ are independently of one another hydrogen, $C_1$—$C_{12}$alkyl or aryl, and A, when n is 1, is hydrogen, alkali metal, $C_1$—$C_{36}$alkyl, $C_2$—$C_6$alkoxyalkyl, $C_5$—$C_{12}$cycloalkyl, $C_7$—$C_9$-aralkyl, $C_1$—$C_{36}$alkyl-substituted $C_7$—$C_9$aralkyl, aryloxy-($C_2$—$C_6$alkyl) or a 5- or 7-membered heterocyclic ring, A, when n is 2, is an alkaline earth metal, $C_2$—$C_{12}$alkylene, $C_6$—$C_{10}$cycloalkylene, $C_6$—$C_{10}$arylene, a group

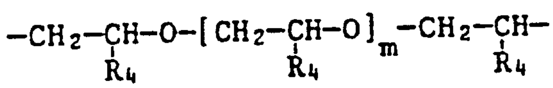

in which m is 1 or 2 and $R_4$ is hydrogen or methyl, or a group

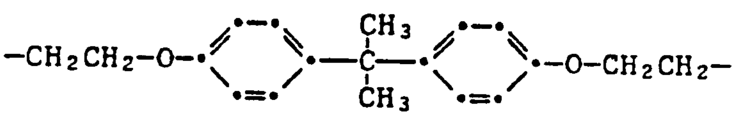

A, when n is 3, is $C_3$—$C_{12}$alkanetriyl or $C_3$—$C_{12}$alkanetriyl interrupted by one or more oxygen atoms, and A, when n is 4, is $C_4$—$C_6$alkanetetrayl.

2. A composition according to claim 1, in which R′ and R″ are independently of one another hydrogen, $C_1$—$C_{18}$alkyl, cyclopentyl, cyclohexyl, benzyl, α-methylbenzyl or α,α-dimethylbenzyl and $R_2$ and $R_3$ are independently of one another hydrogen or $C_1$—$C_4$alkyl.

3. A composition according to claim 2, in which R′ and R″ are benzyl and $R_2$ and $R_3$ are hydrogen.

4. A composition according to claim 1, in which n is 1 and A is $C_1$—$C_{18}$alkyl.

5. A composition according to claim 1 in which n is 1 and A is hydrogen.

6. A composition according to claim 1, in which n is 2 and A is $C_2$—$C_6$alkylene, cyclohexylene, phenylene or xylylene.

7. A composition according to claim 1, in which n is 3 and A is glyceryl or trimethylylpropane.

8. A composition according to claim 1, in which n is 4 and A is pentaerythrityl.

9. A composition according to claim 1, in which the compound of the formula I is methyl 3 - (N,N - dibenzylaminoxy)propanoate, ethyl 3 - (N,N - dibenzylaminoxy)propanoate, 1,6 - hexamethylene-bis[3 - (N,N - dibenzylaminoxy)propanoate], methyl 2 - methyl - 3 - (N,N - dibenzylaminoxy)propanoate, octadecyl 3 - (N,N - dibenzylaminoxy)propanoate, tetrakis - [(N,N - dibenzylaminoxy)ethylcarbonyloxy-methyl]methane, octadecyl 3 - (N,N - diethylaminoxy)propanoate or 1,6 - hexamethylene - bis[3 - (N - allyl - N - dodecylaminoxy)propanoate].

10. A composition according to claim 1, in which the organic material is a synthetic polymer.

11. A composition according to claim 10, in which the synthetic polymer is a polyolefin homopolymer or copolymer.

12. A composition according to claim 1, which additionally contains a metal salt of a higher fatty acid and/or a phenolic antioxidant.

13. Use of a compound of the formula I according to claim 1 for stabilizing organic material against oxidative, thermal and/or actinic degradation.

14. A compound of the formula IA

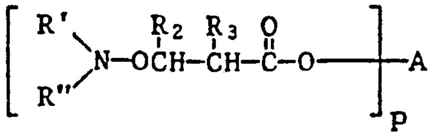

(IA)

in which p is an integer from 2 to 4, R′ and R″ are independently of one another hydrogen, $C_1$—$C_{36}$alkyl, allyl, $C_5$—$C_{12}$cycloalkyl, $C_7$—$C_9$aralkyl or $C_1$—$C_{36}$alkyl-substituted $C_7$—$C_9$aralkyl, $R_2$ and $R_3$ are independently of one another hydrogen, $C_1$—$C_{12}$alkyl or aryl, A, when p is 2, is an alkaline earth metal, $C_2$—$C_{12}$alkylene, $C_6$—$C_{10}$cycloalkylene, $C_6$—$C_{10}$arylene, a group

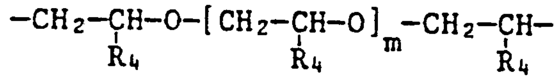

in which m is 1 or 2 and $R_4$ is hydrogen or methyl, or a group

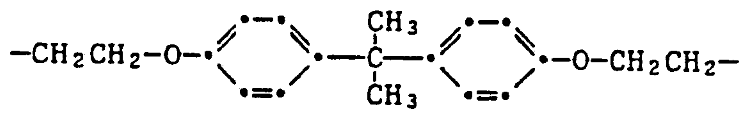

A, when p is 3, is $C_3$—$C_{12}$alkanetriyl or $C_3$—$C_{12}$alkanetriyl interrupted by one or more oxygen atoms, and A, when p is 4, is $C_4$—$C_6$alkanetetrayl.